# EUROPÄISCHE PATENTANMELDUNG

(11) **EP 2 246 645 A2**
(43) Veröffentlichungstag der Anmeldung: **03.11.2010**
(21) Anmeldenummer: 10004238.1
(22) Anmeldetag: 21.04.2010
(51) Int. Cl.: F24J 2/52

(54) **Befestigungsvorrichtung**

(30) Priorität: 30.04.2009 AT 6622009
(71) Anmelder: Vaillant GmbH, 42859 Remscheid (DE)
(72) Erfinder: Meiske, Gerhard, 42855 Remscheid (DE)
(74) Vertreter: Hocker, Thomas

(57) **Zusammenfassung**

Vorrichtung zur Befestigung eines Solarkollektors auf einem Dach, wobei die Vorrichtung aus einem Rohr (1) besteht, das ein erstes Ende zur Aufnahme des Solarkollektors und ein zweites Ende aufweist, wobei das zweite Ende einer Montageschiene (4) zur Befestigung auf dem Dach zugewandt ist und das zweite Ende in eine, die Montageschiene (4) umfassende, und entlang der Montageschiene (4) verschiebbar befestigbaren Vorrichtung (3) beweglich gelagert ist, wobei das Rohr (1) und somit der Solarkollektor mittels einer Schraube (5) zur jeweiligen Dachneigung einstellbar sind.

## Beschreibung

Die Erfindung bezieht sich auf eine Vorrichtung zur Befestigung eines Solarkollektors auf einem Dach.

Solarkollektoren werden meistens auf einem Dach über eine Trägerkonstruktion, z.B. ein Dachhaken oder eine Montageschiene, befestigt. Bei Dachhaken, die an den Dachlatten oder Dachsparren befestigt werden, wird eine punktförmige Last auf die jeweiligen Pfannen eingeleitet. Diese Belastung z.B. bei hohen Schnee- und Windlasten kann im ungünstigsten Fall zum Bruch der Dachpfannen führen.

Aufgabe der vorliegenden Erfindung ist es, eine Befestigungsvorrichtung für einen Sonnenkollektor zur Verfügung zu stellen, durch die eine hohe Lastaufnahme ermöglicht und dadurch einen Dachpfannenbruch verhindert wird.

Dies wird gemäß den Merkmalen des unabhängigen Vorrichtungsanspruchs 1 mit einer Vorrichtung zur Befestigung eines Solarkollektors auf einem Dach erreicht, wobei die Vorrichtung aus einem Rohr besteht, das
- ein erstes Ende zur Aufnahme des Solarkollektors und ein zweites Ende aufweist, wobei das zweite Ende einer Dachschiene zur Befestigung auf dem Dach zugewandt ist und
- das zweite Ende in eine der Dachschiene umfassende und entlang der Dachschiene verschiebbar befestigbaren Vorrichtung beweglich gelagert ist,
- wobei das Rohr und somit der Solarkollektor mittels einer Schraube zur jeweiligen Dachneigung ausgerichtet werden.

Mit der erfindungsgemäßen Befestigungsvorrichtung wird eine hohe Lastaufnahme ermöglicht und dadurch eine punktförmige Belastung der Dachpfannen verhindert. Die Last wird direkt in die tragenden Elemente des Dachaufbaues eingeleitet und somit werden versteckte Dauerschäden wie z.B. ein unentdeckter Pfannenbruch unter dem Sonnenkollektor vermieden.

Die erfindungsgemäße Vorrichtung stellt eine variable Befestigung für unterschiedliche Dachneigungen dar und ist auch für Dachdurchführungspfannen geeignet.

Vorteilhafte Ausgestaltungen ergeben sich durch die Merkmale der abhängigen Ansprüche. Die Erfindung wird nun anhand der folgenden Figuren detailliert erläutert. Hierbei zeigen
- Fig. 1: die erfindungsgemäße Befestigungsvorrichtung, die am Dach mittels einer Montageschiene befestigbar ist
- Fig. 2: eine Schnittdarstellung der erfindungsgemäßen Befestigungsvorrichtung und
- Fig. 3: zwei Positionsstellungen der erfindungsgemäßen Befestigungsvorrichtung zu einer senkrechten Dachdurchführung.

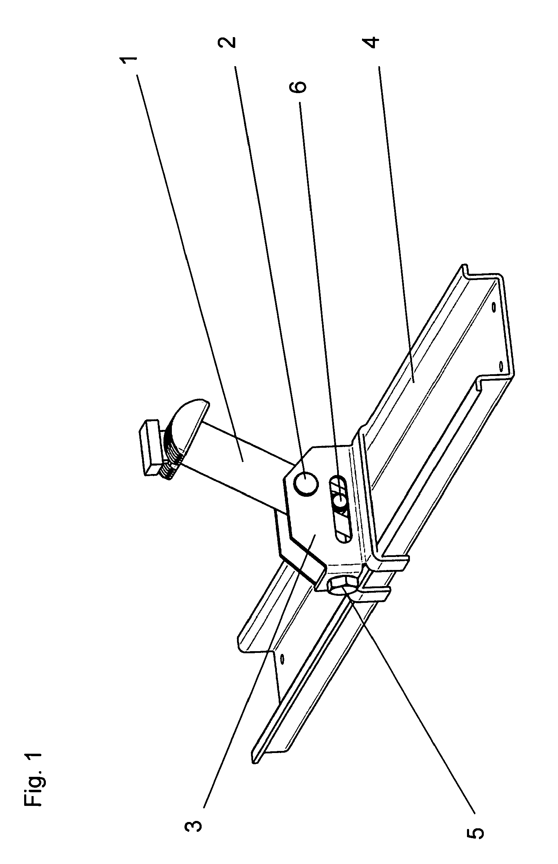

Figur 1 zeigt die erfindungsgemäße Befestigungsvorrichtung, die sich aus einem Rohr 1 mit einem ersten Ende zur Aufnahme eines Solarkollektors und einem zweiten Ende, das in eine einer Montageschiene 4 umfassende und entlang der Montageschiene 4 verschiebbar befestigbaren Vorrichtung 3 beweglich gelagert ist. Dies erfolgt mittels eines Bolzens 2, so dass das zweite Ende des Rohrs 1 in der Vorrichtung 3 drehbar gelagert wird. Bei einer hohen Last, verursacht durch Schnee oder Wind, wird diese statt in die Dachpfanne, direkt in die tragenden Elementen des Dachaufbaues eingeleitet. Ein Pfannenbruch wird somit verhindert.

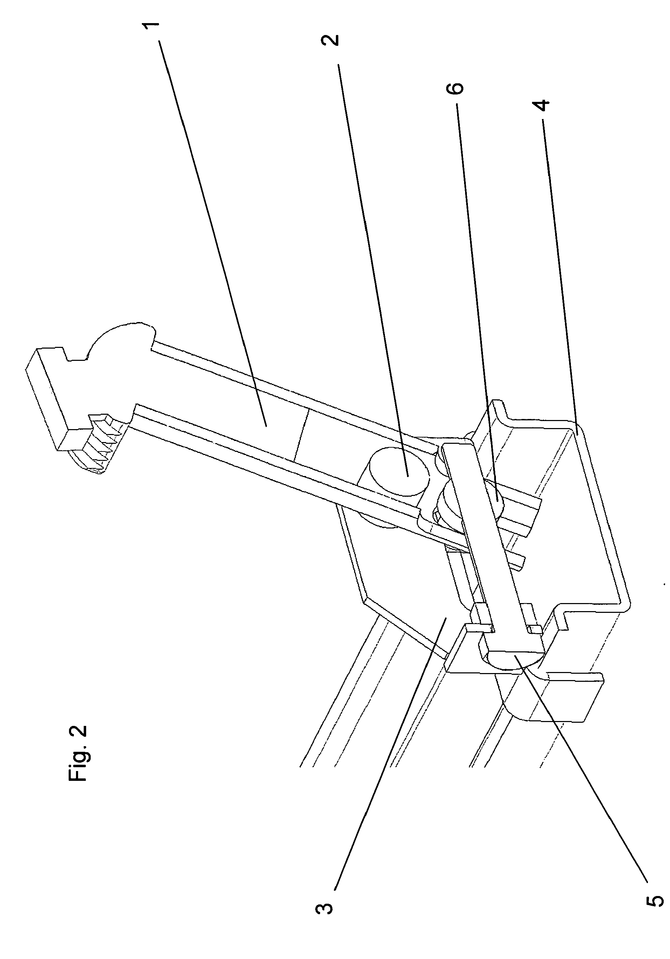

Wie aus Figur 2 ersichtlich, werden das Rohr 1 und somit der Solarkollektor mittels einer Schraube 5 zur jeweiligen Dachneigung ausgerichtet, wodurch ein variables Befestigungssystem für unterschiedliche Dachneigungen zur Verfügung gestellt wird.

Die erfindungsgemäße Befestigungsvorrichtung eignet sich auch für Dachdurchführungspfannen. Dabei wird die Rohraufnahme, Vorrichtung 3, in Längsrichtung und Neigung zum Dach mittig zu der Dachdurchführungspfanne ausgerichtet.

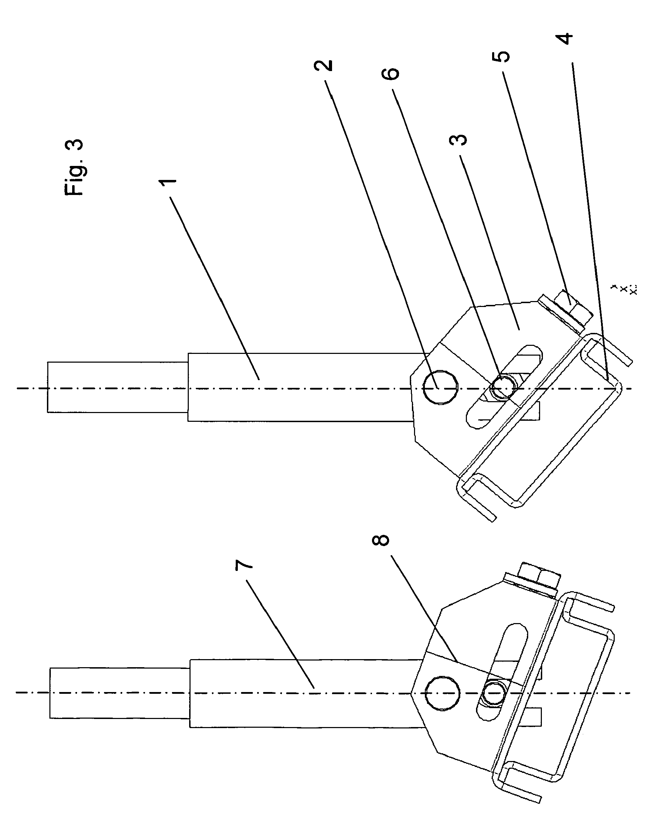

Figur 3 zeigt, dass das Rohr 1 bei jeder Dachneigung einstellbar auf den erforderlichen Winkel zwischen seiner Achse 7 und der senkrechten Dachdurchführung 8 ist.

Durch die variable Anpassung des Rohrs 1 an unterschiedliche Dachneigungen wird ein flexibles Befestigungssystem zur Verfügung gestellt, das zusätzlich eine hohe Lastaufnahme ermöglicht.

## Patentansprüche

1. Vorrichtung zur Befestigung eines Solarkollektors auf einem Dach **dadurch gekennzeichnet, dass** die Vorrichtung aus einem Rohr (1) besteht, das
• ein erstes Ende zur Aufnahme des Solarkollektors und ein zweites Ende aufweist, wobei das zweite Ende einer Montageschiene (4) zur Befestigung auf dem Dach zugewandt ist und
• das zweite Ende in eine die Montageschiene (4) umfassende und entlang der Montageschiene verschiebbar befestigbaren Vorrichtung (3) beweglich gelagert ist,
• wobei das Rohr (1) und somit der Solarkollektor mittels einer Schraube (5) zur jeweiligen Dachneigung einstellbar sind.

2. Vorrichtung zur Befestigung eines Solarkollektors nach Anspruch 1, **dadurch gekennzeichnet, dass** das Rohr (1) mit einem Bolzen (2) drehbar in die Vorrichtung (3) gelagert ist, wobei der Bolzen (2) der Lastaufnahme dient.

3. Vorrichtung zur Befestigung eines Solarkollektors nach Anspruch 1 oder 2, **dadurch gekennzeichnet, dass** diese zur Anbringung auf Dachdurchführungspfannen vorgesehen ist.
